# FASCICULE DE BREVET EUROPEEN

(11) **EP 1 968 836 B1**
(45) Date de publication et mention de la délivrance du brevet: **23.03.2011**
(21) Numéro de dépôt: 05850630.4
(22) Date de dépôt: 29.12.2005
(51) Int. Cl.: B60T 17/18

(54) **DISPOSITIF DE FREINAGE POUR UN VEHICULE INDUSTRIEL**
BREMSVORRICHTUNG FÜR EIN NUTZFAHRZEUG
BRAKING DEVICE FOR A COMMERCIAL VEHICLE

(43) Date de publication de la demande: 17.09.2008
(73) Titulaire: RENAULT TRUCKS, 69800 St Priest (FR)
(72) Inventeur: ROLLIN, Christian, F-38460 Saint Romain de Jalionas (FR)
(74) Mandataire: Putet, Gilles
(86) Numéro de dépôt international: PCT/FR2005/003304
(87) Numéro de publication internationale: WO 2007/074218

(56) Documents cités:
- FR-A- 2 524 853
- GB-A- 1 487 972
- US-A- 3 260 551
- PATENT ABSTRACTS OF JAPAN vol. 003, no. 073 (M-063), 23 juin 1979 (1979-06-23) & JP 54 049474 A (JAPANESE NATIONAL RAILWAYS<JNR>; others: 01), 18 avril 1979 (1979-04-18)

## Description

### Domaine technique de l'invention

La présente invention concerne un système de freinage pour un véhicule industriel.

### Arrière plan technologique

De façon classique, les véhicules industriels et notamment les camions (par camion, on entend tout véhicule motorisé destiné à porter ou tracter une charge) sont équipés d'un système de freinage fonctionnant grâce à de l'énergie pneumatique.

Une particularité des camions réside dans le fait qu'ils peuvent posséder deux circuits de freinage. Un circuit de freinage peut commander les freins du ou des trains roulants arrière tandis que le second circuit de freinage peut commander les freins du ou des trains roulants avant. Chaque circuit de freinage comporte son propre réservoir d'air comprimé qui est relié à un circuit de commande de freinage.

Lors de l'homologation d'un camion, il est pratiqué un test au cours duquel le circuit de freinage avant est neutralisé. Pour recevoir un certificat d'homologation, le camion doit néanmoins pouvoir conserver une certaine capacité de décélération.

Il doit être précisé que ce test d'homologation est généralement réalisé avec un camion sans charge. Or, un camion présente une répartition des masses très inégale avec une concentration de masse sur l'avant. L'adhérence sur le ou les trains roulants arrière est donc très faible si bien qu'un freinage exercé uniquement sur le train arrière peut se révéler insuffisant.

Par ailleurs, en conditions d'opération d'un véhicule industriel, il peut se produire une défaillance de l'un des circuits de freinage. Certes, dans ce cas le second circuit de freinage reste opérationnel. Mais une perte totale de freinage sur un essieu ou un groupe d'essieux peut s'avérer extrêmement préjudiciable surtout si la défaillance se produit dans un cas défavorable. Dans le cas d'un véhicule dont la masse est concentrée sur l'avant et dont le circuit de freinage est inopérant, le fait qu'une capacité de freinage soit concentrée exclusivement sur le ou les essieux arrières peut s'avérer insuffisant pour assurer un décélération efficace du fait du peu d'adhérence du ou des essieux arrière.

Il existe, certes, des systèmes qui permettent de rétablir une certaine capacité de freinage sur l'essieu ou le groupe d'essieux dont le circuit de freinage est défaillant. Toutefois, ces systèmes sont complexes, coûteux et permettent généralement de rétablir une capacité de freinage uniquement sur une unique roue du train roulant dont le circuit de freinage est défaillant.

Le document US3260551 et EP 0738640A2 décrit un dispositif de freinage comme décrit dans le préambule de la revendication 1.

### Résumé de l'invention

Un but de l'invention est de proposer un dispositif de freinage pour un véhicule industriel ayant une fonction de secours permettant de rétablir une certaine capacité de freinage à un circuit de freinage défaillant.

Un autre but de l'invention est de proposer un dispositif de freinage ayant une fonction de secours agissant sur les deux roues du train roulant dont le circuit de freinage est défaillant.

Un autre but de l'invention est de proposer un dispositif de freinage ayant une fonction de secours qui soit fiable.

Un autre but de l'invention est de proposer un dispositif de freinage ayant une fonction de secours dont le surcoût reste mesuré.

L'invention concerne essentiellement un dispositif de freinage selon la revendication 1.

L'invention permet de rétablir une capacité de freinage sur le train roulant avant, en cas de défaillance du circuit de freinage avant en dérivant une partie du fluide du circuit de freinage arrière vers le circuit de freinage avant.

Dans une forme de réalisation préférée, les moyens de dérivation comprennent une double valve d'arrêt susceptible de dériver du fluide sous pression du circuit de freinage arrière vers le circuit de freinage avant dans le cas où le circuit de freinage avant subit une chute de pression.

L'introduction d'une double valve d'arrêt dans le dispositif de freinage permet, de détourner une partie de fluide sous pression du circuit de freinage arrière pour alimenter le circuit de freinage avant. Cet effet est obtenu par un composant, en l'occurrence une double valve d'arrêt, qui est un composant standard, donc peu coûteux, qui a une structure simple, donc d'un fonctionnement fiable.

En pratique, la double valve d'arrêt peut présenter une première entrée et une sortie connectées au circuit de freinage avant et une seconde entrée connectée au circuit de freinage arrière, et peut présenter un clapet mobile entre la première et la seconde entrée pouvant obturer la seconde entrée en fonctionnement normal du circuit de freinage avant et pouvant obturer le première entrée en fonctionnement défaillant

Ainsi en cas de chute de pression dans le circuit de freinage avant, qui est la traduction d'une défaillance dans le circuit de freinage avant, le clapet de la double valve d'arrêt va, de manière automatique puisque le clapet est mobile par une différence de pression, se placer contre la première entrée de la double valve d'arrêt et ainsi autoriser l'alimentation en fluide sous pression du ou des train(s) roulant(s) avant(s), tout en obturant toute la partie du circuit de freinage avant qui se trouve en amont de la double valve d'arrêt.

Dans une autre possibilité de réalisation de l'invention, le circuit de freinage avant présente une valve de desserrage en amont de laquelle est positionnée la double valve d'arrêt.

Dans une autre possibilité de réalisation de l'invention, le circuit de freinage avant présente une valve de réduction qui est pilotée par un circuit de pilotage alimenté par un piquage réalisé en aval du correcteur et connecté à l'entrée de la double valve d'arrêt.

### Brève description des figures

Pour sa bonne compréhension, l'invention est décrite en référence au dessin ci annexé représentant à titre d'exemple non limitatif deux formes de réalisation d'un dispositif de freinage d'un véhicule industriel selon celle-ci.
Figures 1 et 2 sont des diagrammes conceptuels représentant deux dispositifs de freinage selon des dispositions habituelles de l'art antérieur,
Figure 3 est un diagramme conceptuel représentant une forme de réalisation d'un dispositif de freinage selon l'invention en fonctionnement normal,
Figure 4 est un diagramme conceptuel représentant le dispositif dé freinage de la figure 3 selon un mode de fonctionnement anormal,
Figure 5 est un diagramme conceptuel représentant une autre forme de réalisation d'un dispositif de freinage selon l'invention en fonctionnement normal,
Figure 6 est un diagramme conceptuel représentant le dispositif de freinage de la figure 5, selon un mode de fonctionnement anormal.

### Description détaillée de l'invention

Par simplification, il est précisé que les éléments qui se retrouvent dans les deux formes de réalisation sont désignés par les mêmes références numériques.

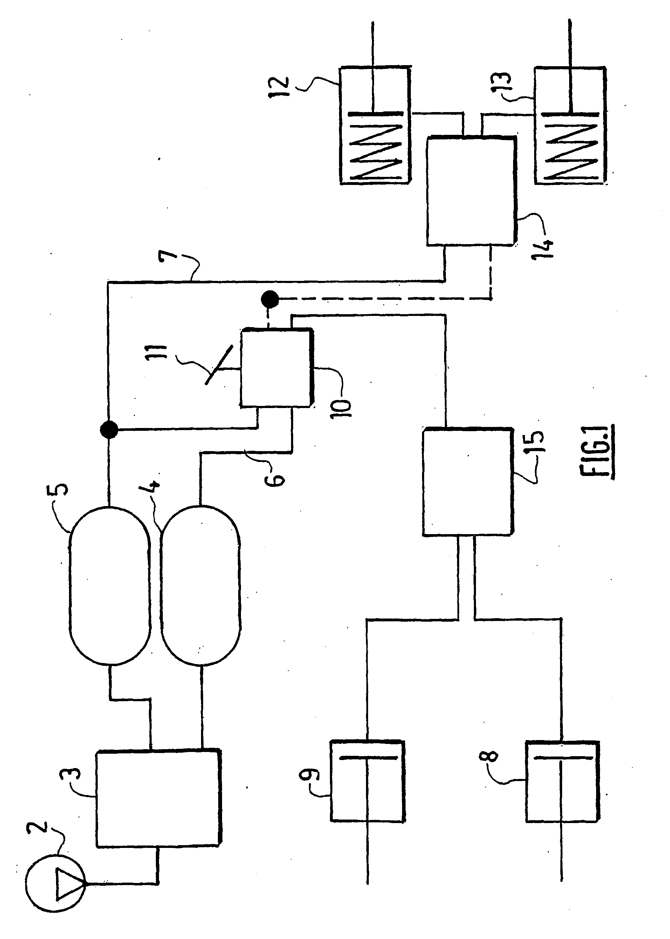

La figure 1 montre schématiquement l'architecture d'un dispositif de freinage pour un véhicule industriel selon l'art antérieur.

De façon habituelle, le freinage d'un véhicule industriel, par exemple un camion porteur d'une charge ou tracteur d'une charge, est assuré de manière pneumatique. A cet effet, comme on peut le voir sur les figures, il est prévu un compresseur d'air 2 qui alimente un distributeur d'air 3. Le distributeur d'air 3 a comme fonction de filtrer et réguler la pression de l'air provenant du compresseur d'air 2.

En aval du distributeur d'air 3, on trouve deux réservoirs 4 et 5 qui alimentent respectivement un circuit de freinage avant 6 destiné à fournir l'énergie de freinage à un ou plusieurs train(s) roulant(s) avant et un circuit de freinage arrière 7 destiné à fournir l'énergie de freinage à un ou plusieurs train(s) roulant(s) arrière.

Le circuit de puissance avant 6 est bien entendu raccordé à deux actionneurs de frein 7 et 8 qui convertissent l'énergie pneumatique en une action mécanique sur un moyen de freinage d'une roue, c'est-à-dire un disque ou un tambour selon les cas. Les moyens de freinage ne sont pas représentés sur les figures en raison de leurs caractéristiques largement connues.

Le freinage est déclenché par un conducteur de véhicule qui appuie, généralement, avec son pied sur une pédale 11 d'un robinet de commande 10.

Dans le dispositif de la figure 1, le circuit de freinage avant 6 comprend, par ailleurs, une valve de desserrage rapide 15 qui permet d'évacuer l'air directement dans l'atmosphère immédiatement après la détente de la pression de freinage.

Le circuit de freinage arrière 7 présente une structure sensiblement comparable à celle du circuit de freinage avant 6 en ce sens que ce le circuit arrière contrôle et alimente de manière autonome deux actionneurs arrières 12 et 13.

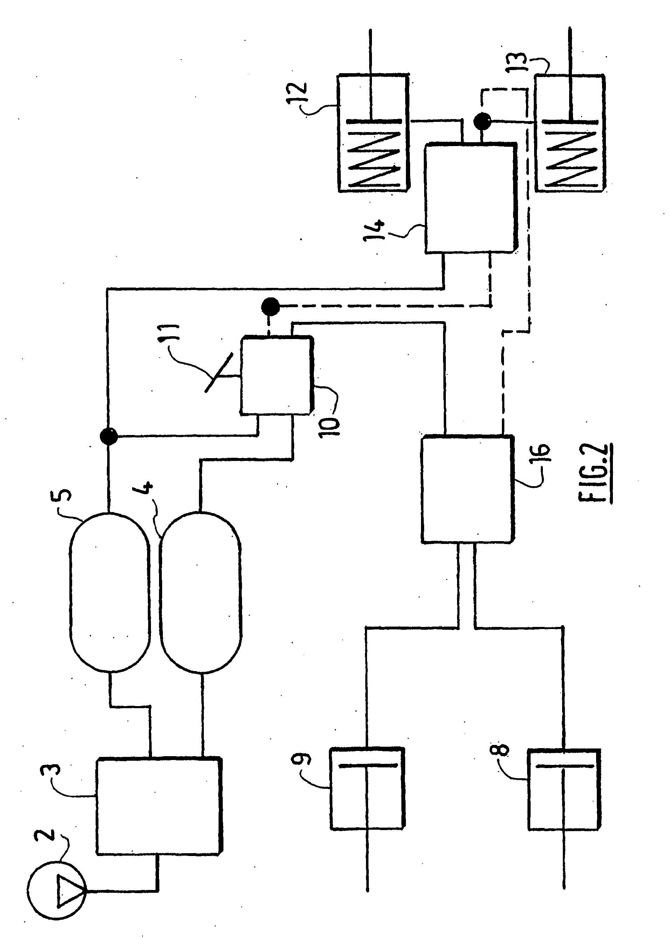

Le circuit de freinage arrière 7 peut intégrer, par ailleurs, un correcteur 14 qui corrige la pression appliquée aux actionneurs arrière 12 et 13 en fonction de la charge qui s'applique sur le ou les trains roulants arrière. Le pilotage du correcteur 14 apparaît en traits discontinus sur la figure 2.

La figure 2 montre une variante de réalisation d'un dispositif de freinage de la figure 1.

Dans cette variante de réalisation, on peut voir que le circuit de freinage avant 6 intègre une valve de réduction 16. Cette valve de réduction 16, qui est pilotée par le correcteur 14, assure une limitation de la pression de freinage transmisse aux actionneurs avant 8 et 9.

On constate donc qu'une défaillance du circuit de freinage avant 6 se traduit par une perte de freinage totale sur le train roulant avant 6 et ce, que le dispositif de freinage soit dans une configuration telle que celle représentée à la figure 1 ou soit dans une configuration telle que celle représentée à la figure 2.

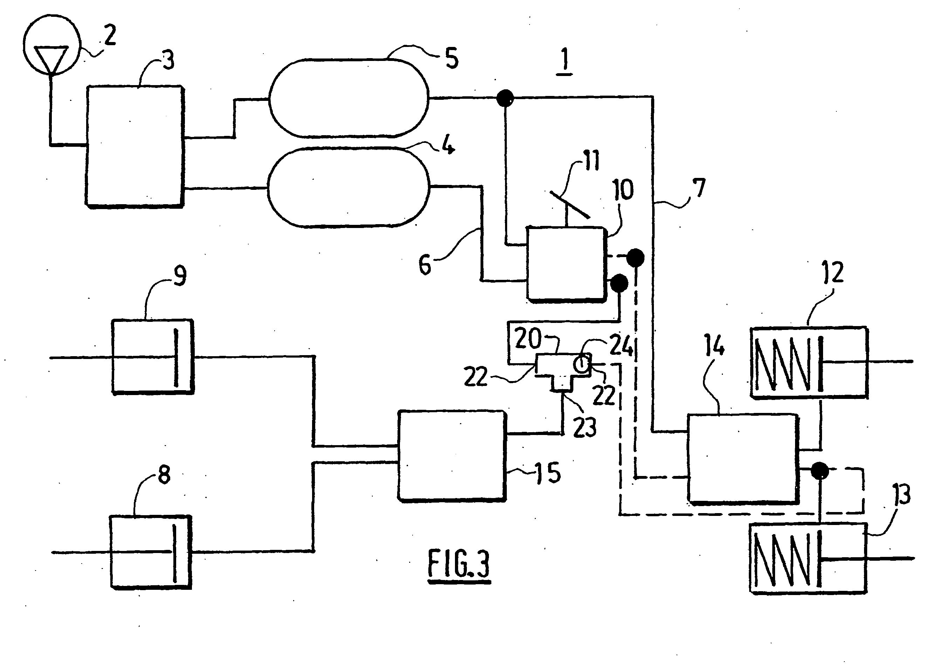

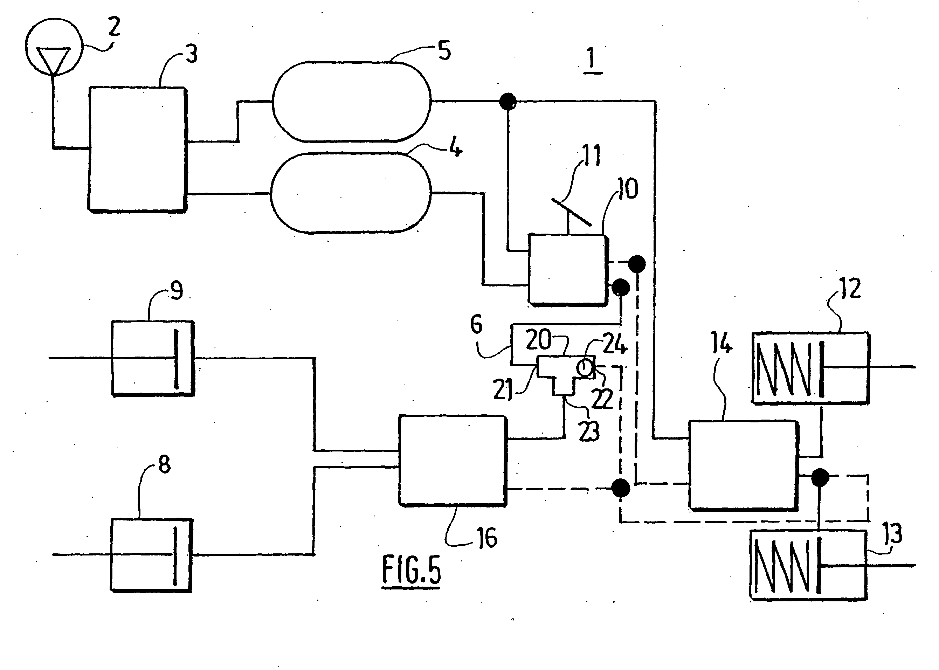

En se reportant maintenant à la figure 3 ou à la figure 5, le dispositif de freinage 1 selon l'invention comporte, dans ses différentes formes de réalisation, une double valve d'arrêt 20 est montée sur le circuit de freinage avant 6 qui, dans chaque forme de réalisation, a pour fonction de d'alimenter, en cas de défaillance du circuit de freinage avant 6, ce même circuit de freinage avant 6 par du fluide sous pression provenant du circuit de freinage arrière 7. On peut rappeler qu'une double valve d'arrêt 20 est un composant standard et, donc, peu coûteux qui, par ailleurs, présente un fonctionnement tout à fait fiable.

En se référant tout d'abord à la figure 3, il apparaît que la double valve d'arrêt 20 présente deux entrées 21 et 22 et une sortie 23 ; un clapet 24 circule entre les deux entrées 21 et 22 et obture l'entrée qui est à la pression la plus faible.

La double valve d'arrêt 20, dans l'exemple représenté, est disposée dans le circuit dé freinage avant 6 entre le dispositif de commande 10 et la valve de desserrage 15. L'entrée 22 de la double valve d'arrêt est, quant à elle, reliée au circuit de freinage arrière 7. En pratique, un piquage peut être réalisé en aval du correcteur 14 pour alimenter l'entrée 22 de la double valve d'arrêt 20 en fluide sous pression. Ainsi le clapet 24 est soumis de par l'entrée 21 à la pression du circuit de freinage avant 6 et de par l'entrée 22 à la pression du circuit de freinage arrière 7. De façon pratique, la double valve d'arrêt 20 peut, par exemple, être fixée directement sur la valve de desserrage 15.

En fonctionnement normal du dispositif de freinage, en ce qui concerne le circuit de freinage avant 6, le fluide sous pression à une pression qui est fonction de l'action exercée sur la pédale 11 alimente la double valve d'arrêt 20 par l'entrée 21, pousse le clapet 24 en direction de l'entrée 22 fermant cette dernière et sort de la double valve d'arrêt 20 par la sortie 23 en direction de la valve de desserrage 15.

En fonctionnement normal du dispositif, en ce qui concerne le circuit de freinage arrière 7, le fluide sous pression parvient au correcteur 14 avec une pression qui est une fonction de l'action exercée sur la pédale 11. Comme la double valve d'arrêt 20 est connectée au circuit de freinage arrière 7, le clapet 24 est soumis par son entrée 22 à la pression du circuit de freinage arrière. En pratique, la pression de circuit de freinage arrière 7 est inférieure à la pression du circuit de freinage avant 6 et, en outre, il y a un décalage entre la mise en pression du circuit de freinage avant 6 et la mise en pression de circuit de freinage arrière 7 lors d'un freinage. Ainsi en fonctionnement normal, la présence de la double valve d'arrêt 20 est transparente et le fonctionnement du dispositif de freinage est similaire à celui montré à la figure 1.

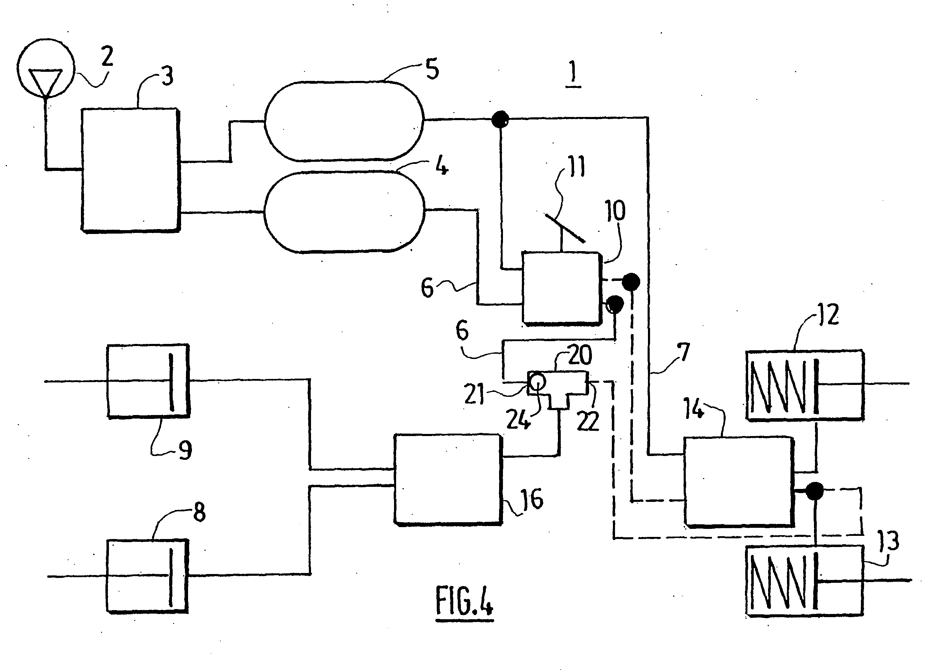

La figure 4 montre le dispositif de freinage 1 en fonctionnement anormal à cause d'une chute de pression dans le circuit de freinage avant 6. Dans ce cas de figure, la double valve d'arrêt 20 permet d'alimenter les actionneurs 8 et 9 de freinage avant 6 par du fluide sous pression dévié du circuit de freinage arrière 7.

Concrètement, du fait de la chute de pression dans le circuit de freinage avant 6, le clapet 24 est repoussé contre l'entrée 21 de la double valve d'arrêt 20 par le fluide sous pression en provenance du circuit de freinage arrière 7. Ainsi, et c'est là l'effet majeur de la présence de la double valve d'arrêt 20 dans le dispositif de freinage, une capacité de freinage est rétablie sur les actionneurs de freinage avant 8 et 9 quand bien même le circuit de freinage avant est défaillant.

Dans l'exemple représenté à la figure 5, la double valve d'arrêt 20 est positionnée dans le dispositif de freinage de manière telle que l'entrée 21 est alimentée par le circuit de freinage avant 6 et la sortie 23 est reliée aux actionneurs de freinage avant 8 et 9 via la valve de réduction 16.

L'entrée 22 de la double valve d'arrêt est, pour sa part, connectée au circuit de freinage arrière 7, puisque comme on peut le voir sur la figure 5, l'entrée 22 de la double valve d'arrêt 20 est alimentée par l'air sous pression assurant le pilotage de la valve de réduction 16. En pratique, la double valve d'arrêt 20 peut être fixée directement sur la valve de réduction 16.

En fonctionnement normal du dispositif de freinage 1 qui est illustré par la figure 5, au cours d'un freinage, une action est exercée par un utilisateur sur la pédale 11 et, en fonction de cette action, le robinet de commande alimente les circuits de freinage avant et arrière en fluide sous pression.

Pour le circuit de freinage avant 6, cela se traduit par l'introduction de fluide sous pression dans la double valve d'arrêt 20 par son entrée 21 qui pousse le clapet 24 contre l'entrée 22 connectée au circuit de freinage arrière 7. Le fluide sous pression sort par la sortie 23 pour alimenter les actionneurs de freinage 8 et 9 avant via la valve de réduction 16.

Pour le circuit de freinage arrière 7, cette même action sur la pédale 11 se traduit par la fait que les actionneurs de freinage 12 et 13 arrière sont mis en action via le correcteur 14. Au cours du freinage, le pilotage de la valve de réduction 16 est assuré par un piquage réalisé en aval du correcteur 14 ; comme l'entrée 22 de la double valve d'arrêt 20 est, par ailleurs, reliée au circuit de pilotage de la valve de réduction, le clapet 24 est donc soumis au niveau de l'entrée 22 à une pression qui est toutefois inférieure à la pression qui règne dans le circuit de freinage avant 6.

Cette différence de pression entre les deux entrées 21 et 22 de la double valve d'arrêt 20 est due au fait que la pression dans le circuit de freinage avant 6 est supérieure à la pression de pilotage de la valve de réduction 16. Cette différence de pression est également due au fait que le robinet de commande 10 peut induire un décalage dans l'action de freinage sur le circuit de freinage avant 6 et sur le circuit de freinage arrière 7.

Comme on peut le voir en fonctionnement normal du dispositif de freinage 1, le fait que le circuit de freinage avant 6 soit connecté au circuit de freinage arrière 7 par la double valve d'arrêt 20 ne modifie pas le fonctionnement du dispositif de freinage.

En revanche en cas de défaillance du circuit de freinage avant 6, c'est-à-dire en cas de chute de pression du circuit de freinage avant, la présence de la double valve d'arrêt 20 s'avère particulièrement avantageuse.

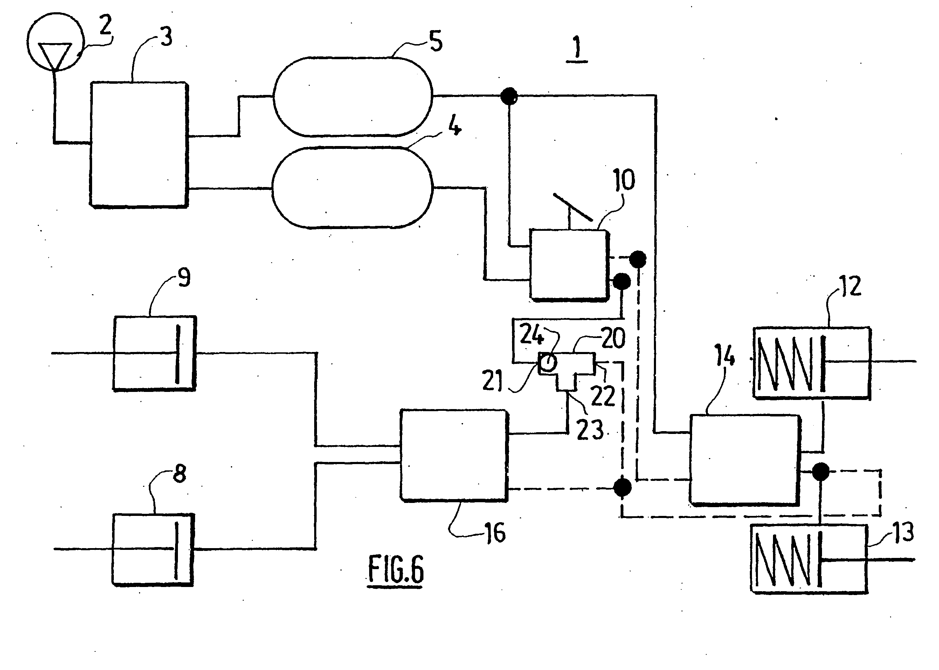

Comme cela apparaît à la figure 6, en cas de défaillance du circuit de freinage avant 6, l'entrée 21 de la double valve d'arrêt 20 se trouve à une pression nulle. Par conséquent, le clapet de la double valve d'arrêt 20 est poussé par le fluide sous pression qui assure le pilotage de la valve de réduction 16. Ce fluide sous pression alimente ainsi les actionneurs du circuit de freinage 8 et 9 avant rétablissant ainsi une capacité de freinage sur le train roulant avant 6. Comme on le voit, ce rétablissement de puissance de freinage est obtenu grâce à l'introduction d'une double valve d'arrêt 20 qui interconnecte un circuit de freinage avant 6 et un circuit de freinage arrière 7.

## Revendications

1. Dispositif de freinage (1) à fluide sous pression notamment pour un véhicule industriel, comprenant un circuit de freinage avant (6) agissant sur au moins un train roulant avant et un circuit de freinage arrière (7) agissant sur au moins un train roulant arrière, le dispositif de freinage comprenant des moyens de dérivation du fluide sous pression du circuit de freinage arrière (7) vers le circuit de freinage avant (6) dans le cas où le circuit de freinage avant subit une chute de pression, **caractérisé en ce que** le circuit de freinage arrière (7) inclut un correcteur de freinage (14) qui corrige la pression appliquée à des actionneurs arrière en fonction de la charge qui s'applique sur le ou les trains roulants arrière, et **en ce qu'**un piquage est réalisé en aval du correcteur de freinage (14) pour alimenter les moyens de dérivation.

2. Dispositif de freinage (1) selon la revendication 1 , **caractérisé en ce que** les moyens de dérivation comprennent une double valve d'arrêt (20) susceptible de dériver du fluide sous pression du circuit de freinage arrière (7) vers le circuit de freinage avant (6) dans le cas où le circuit de freinage avant (6) subit une chute de pression.

3. Dispositif de freinage (1) selon la revendication 2, **caractérisé en ce que** la double valve d'arrêt (20) présente une première entrée (21) et une sortie (23) connectées au circuit de freinage avant (6) et une seconde entrée (22) connectée au circuit de freinage arrière (7), et présente un clapet (24) mobile entre la première entrée (21) et la seconde entrée (22) pouvant obturer la seconde entrée (22) en fonctionnement normal du circuit de freinage avant et pouvant obturer le première entrée (21) en fonctionnement défaillant.

4. Dispositif de freinage (1) selon la revendication 3, **caractérisé en ce que** le circuit de freinage avant (6) présente une valve de desserrage (15) en amont de laquelle est positionnée la double valve d'arrêt (20).

5. Dispositif de freinage (1) selon la revendication 3, **caractérisé en ce que** le circuit de freinage avant (6) présente une valve de réduction (16) qui est pilotée par un circuit de pilotage alimenté par un piquage réalisé en aval du correcteur (14) et connecté à la seconde entrée (22) de la double valve d'arrêt (20).

## Claims

1. Pressurized-fluid braking device (1), notably for a commercial vehicle, comprising a front brake circuit (6) that acts on at least one front wheelset axle assembly and a rear brake circuit (7) that acts on at least one rear wheelset axle assembly, the braking device comprising means for diverting pressurized fluid from the rear brake circuit (7) to the front brake circuit (6) if the front brake circuit suffers a drop in pressure, **characterized in that** the rear brake circuit (7) includes a brake regulator (14) which regulates the pressure applied to rear actuators as a function of the load applied to the rear wheelset axle assembly or assemblies, and **in that** a tapping is performed downstream of the brake regulator (14) to supply fluid to the diverting means.

2. Braking device (1) according to Claim 1, **characterized in that** the diverting means comprise a double shut-off valve (20) capable of diverting pressurized fluid from the rear brake circuit (7) to the front brake circuit (6) if the front brake circuit (6) suffers a drop in pressure.

3. Braking device (1) according to Claim 2, **characterized in that** the double shut-off valve (20) has a first inlet (21) and an outlet (23) which are connected to the front brake circuit (6) and a second inlet (22) which is connected to the rear brake circuit (7), and has a shut-off element (24) able to move between the first inlet (21) and the second inlet (22) and able to shut off the second inlet (22) during normal operation of the front brake circuit and able to shut off the first inlet (21) during defective operation.

4. Braking device (1) according to Claim 3, **characterized in that** the front brake circuit (6) has a brake release valve (15) upstream of which the double shut-off valve (20) is positioned.

5. Braking device (1) according to Claim 3, **characterized in that** the front brake circuit (6) has a reduction valve (16) which is controlled by a control circuit fed from a tapping made downstream of the regulator (14) and connected to the second inlet (22) of the double shut-off valve (20).

## Patentansprüche

1. Bremsvorrichtung (1) mit mit Druck beaufschlagtem Fluid, insbesondere für ein Nutzfahrzeug, die einen vorderen Bremskreis (6), der auf wenigstens eine vordere Radachse wirkt, und einen hinteren Bremskreis (7) umfasst, der auf wenigstens eine hintere Radachse wirkt, wobei die Bremsvorrichtung Einrichtungen zum Ableiten des mit Druck beaufschlagten Fluids von dem hinteren Bremskreis (7) zu dem vorderen Bremskreis (6) für den Fall, dass der vordere Bremskreis einem Druckabfall unterliegt, umfasst, **dadurch gekennzeichnet, dass** der hintere Bremskreis (7) einen Bremskorrektor (14) einschließt, der den auf hintere Stellglieder angelegten Druck in Abhängigkeit von der Belastung korrigiert, die auf die hintere(n) Radachse(n) wirkt, und dass stromabwärts von dem Bremskorrektor (14) eine Stichleitung zur Versorgung der Ableitungseinrichtungen ausgeführt ist.

2. Bremsvorrichtung (1) nach Anspruch 1, **dadurch gekennzeichnet, dass** die Ableitungseinrichtungen ein Doppelrückschlagventil (20) aufweisen, das in der Lage ist, mit Druck beaufschlagtes Fluid vom hinteren Bremskreis (7) zum vorderen Bremskreis (6) für den Fall abzuleiten, dass der vordere Bremskreis (6) einem Druckabfall unterliegt.

3. Bremsvorrichtung (1) nach Anspruch 2, **dadurch gekennzeichnet, dass** das Doppelrückschlagventil (20) einen ersten Einlass (21) und einen Auslass (23), die mit dem vorderen Bremskreis (6) verbunden sind, und einen zweiten Einlass (22) aufweist, der mit dem hinteren Bremskreis (7) verbunden ist und eine bewegliche Klappe (24) zwischen dem ersten Einlass (21) und dem zweiten Einlass (22) aufweist, die bei Normalbetrieb des vorderen Bremskreises den zweiten Einlass (22) verschließen und bei Störbetrieb den ersten Einlass (21) verschließen kann.

4. Bremsvorrichtung (1) nach Anspruch 3, **dadurch gekennzeichnet, dass** der vordere Bremskreis (6) ein Löseventil (15) aufweist, stromaufwärts von dem das Doppelrückschlagventil (20) positioniert ist.

5. Bremsvorrichtung (1) nach Anspruch 3, **dadurch gekennzeichnet, dass** der vordere Bremskreis (6) ein Reduktionsventil (16) aufweist, das durch einen Steuerkreis gesteuert ist, der durch eine stromabwärts von dem Korrektor (14) ausgeführte Stichleitung gespeist wird und mit dem zweiten Einlass (22) des Doppelrückschlagventils (20) verbunden ist.
